(19) **Europäisches Patentamt**
**European Patent Office**
**Office européen des brevets**

(11) **EP 4 707 348 A1**

(12) **EUROPEAN PATENT APPLICATION**

(43) Date of publication:
**11.03.2026 Bulletin 2026/11**

(21) Application number: **25199904.1**

(22) Date of filing: **03.09.2025**

(51) International Patent Classification (IPC):
**C09D 11/106** (2014.01)    **C09D 11/107** (2014.01)
**C09D 11/322** (2014.01)    **C09D 11/326** (2014.01)
**C09D 153/00** (2006.01)

(52) Cooperative Patent Classification (CPC):
**C09D 11/322; C09D 11/106; C09D 11/107;
C09D 11/326; C09D 153/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.09.2024 JP 2024155037**

(71) Applicant: **KYOCERA Document Solutions Inc.
Osaka-shi, Osaka 540-8585 (JP)**

(72) Inventors:
- **INOUE, Toyotsune
  Osaka-shi, Osaka, 540-8585 (JP)**
- **MORISHITA, Arisa
  Osaka-shi, Osaka, 540-8585 (JP)**
- **NAKAE, Yuma
  Osaka-shi, Osaka, 540-8585 (JP)**

(74) Representative: **Viering, Jentschura & Partner
mbB
Patent- und Rechtsanwälte
Grillparzerstraße 14
81675 München (DE)**

(54) **INKJET INK**

(57) An inkjet ink includes: a pigment; a block copolymer including a hydrophobic polymer block formed of benzylmethacrylate and a hydrophilic polymer block formed of methacrylic acid; and water. The block copolymer has an acid value of 120 mg KOH/g or more and 220 mg KOH/g or less. A content of the block copolymer is 0.6 mass% or more and 2.6 mass% or less. A mass ratio of the block copolymer to the pigment is 0.12 or more and 0.51 or less. In the inkjet ink, a mass ratio of a solid in a supernatant liquid obtained by centrifugation is 0.5 mass% or more and 3.0 mass% or less.

EP 4 707 348 A1

## Description

### Field

The present disclosure relates to an inkjet ink.

### Background

Inks for recording images on recording media such as paper are desired to have high image density of the image recorded on the recording medium. Japanese Patent No. 5636580 discloses a technology for enhancing the image density. In the technology disclosed in Japanese Patent No. 5636580, a block copolymer that includes a methacrylate-based hydrophobic polymer block and a hydrophilic polymer block containing methacrylic acid is blended as a pigment dispersion resin in an inkjet ink.

### Summary

According to an embodiment of the present disclosure, there is provided an inkjet ink that includes: a pigment; a block copolymer including a hydrophobic polymer block formed of benzylmethacrylate and a hydrophilic polymer block formed of methacrylic acid; and water.
The block copolymer has an acid value of 120 mg KOH/g or more and 220 mg KOH/g or less.
A content of the block copolymer is 0.6 mass% or more and 2.6 mass% or less.
A mass ratio of the block copolymer to the pigment is 0.12 or more and 0.51 or less.
In the inkjet ink, a mass ratio of a solid in a supernatant liquid obtained by centrifugation is 0.5 mass% or more and 3.0 mass% or less.

### Detailed Description

In inkjet inks, it is common to weaken the adsorption force of the pigment dispersion resin on the pigment in order to enhance image density, thereby separating the pigment dispersion resin from the pigment on the recording medium to increase the agglomeration of pigments on the recording medium. However, in inkjet inks, weakening the adsorption force of the pigment dispersion resin on the pigment makes the dispersibility of the pigment in the solvent unstable, which tends to reduce the long-term preservation stability.
In view of the circumstances as described above, it is an object of the present disclosure to provide an ink capable of achieving both image density and long-term preservation stability.
An embodiment of the present disclosure will be described.
[Configuration of ink]

(Schematic configuration)

An inkjet ink according to an embodiment of the present disclosure (hereinafter, also referred to simply as an "ink") includes: a pigment a; a pigment dispersion resin b; and water. The ink according to this embodiment is a water-based ink that is ejected from a recording head of an inkjet recording apparatus onto a recording medium to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.
In the ink according to this embodiment, by using the pigment dispersion resin b having a specific configuration and setting the amount of the pigment dispersion resin b that is not adsorbed on the pigment a to be within a predetermined range, it is possible to achieve both image density and long-term preservation stability. Details of each component of the ink according to this embodiment will be described below.

(Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.
Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

(Pigment dispersion resin b)

In the ink according to this embodiment, the pigment dispersion resin b is blended as a dispersant that is adsorbed on the surface of the pigment a to enhance the dispersibility of the pigment a in the solvent. Further, the pigment dispersion resin b also functions as a binder for holding the pigment a on the recording medium. In the ink according to this embodiment, fine particles of the benzylmethacrylate/methacrylic acid block copolymer are used as the pigment dispersion resin b. That is, the pigment dispersion resin b is a block copolymer having a structure divided into a hydrophobic polymer block formed of benzylmethacrylate and a hydrophilic polymer block formed of methacrylic acid.

In the pigment dispersion resin b, by using a hydrophobic polymer block formed of benzylmethacrylate, high adsorption force on the pigment a is achieved. As a result, in the ink according to this embodiment, the dispersed state of the pigment a in the solution is easily maintained for a long period of time and the permeation of the pigment a into the recording medium is inhibited, thereby improving the image density. Further, in the ink according to this embodiment, by using a hydrophilic polymer block formed of methacrylic acid, it is possible to further improve the long-term preservation stability.

Further, in the ink according to this embodiment, the amount of the pigment dispersion resin b that is free in the solvent without being adsorbed on the pigment a is controlled. The amount of the pigment dispersion resin b that is free in the solvent can be known from the supernatant liquid obtained by centrifuging the ink. That is, when centrifuging the ink, a pigment dispersion that is a complex of the pigment dispersion resin b adsorbed on the pigment a precipitates, while the pigment dispersion resin b that is free in the solvent remains in the supernatant liquid. Since the solid remained in the supernatant liquid is substantially only the pigment dispersion resin b, by measuring the amount of solid remained in the supernatant liquid, the amount of the pigment dispersion resin b that is free in the solvent in the ink can be known.

In this embodiment, as the centrifugation for precipitating the pigment dispersion, treatment at a rotation speed of 140,000 rpm (1,050,000 G) was performed for 3 hours. Further, in this embodiment, the mass of the solid in the supernatant liquid is measured by thermogravimetric analysis. The ink according to this embodiment is prepared such that the mass ratio of the solid in the supernatant liquid obtained by centrifugation is within a predetermined range. Specifically, the ink according to this embodiment is prepared such that the mass ratio of the solid in the supernatant liquid is 0.5 mass% or more and 3.0 mass% or less. In the ink according to this embodiment, by setting the mass ratio of the solid in the supernatant liquid to 3.0 mass% or less, it is possible to effectively achieve the effect of improving image density and long-term preservation stability by the pigment dispersion resin b. Meanwhile, in the ink according to this embodiment, by setting the mass ratio of the solid in the supernatant liquid to 0.5 mass% or more, it is possible to improve the rubfastness of the image recorded on the recording medium.

Further, in the ink according to this embodiment, the pigment dispersion resin b has an acid value of 120 mg KOH/g or more and 220 mg KOH/g or less. In the ink according to this embodiment, by setting the acid value of the pigment dispersion resin b to 120 mg KOH/g or more, it is possible to ensure dispersibility of the pigment a in the solvent and obtain benefits such as micronization of the pigment dispersion and improvement in the color development and coloration power by the pigment **a.** Further, in the ink according to this embodiment, by setting the acid value of the pigment dispersion resin b to 220 mg KOH/g or less, it is possible to ensure long-term preservation stability.

In the ink according to this embodiment, from the viewpoints of ensuring rubfastness of the image recorded on the recording medium, and the like, the content of the pigment dispersion resin b in the ink is 0.6 mass% or more, and the mass ratio of the pigment dispersion resin b to the pigment a is 0.12 or more. Further, in the ink according to this embodiment, from the viewpoints of preventing the image density from decreasing due to a decrease in coloration power and preventing the dispersibility of the pigment a from decreasing due to an increase in viscosity, the content of the pigment dispersion resin b in the ink is 2.6 mass% or less, and the mass ratio of the pigment dispersion resin b to the pigment a is 0.51 or less.

(Water)

In the ink according to this embodiment, ion exchanged water, purified water, distilled water, or the like can be used as water. In the ink according to this embodiment, from the viewpoints of dryness and ejection reliability, the content of water is favorably 50 mass% or more and 60 mass% or less.

(Other components)

In the ink according to this embodiment, components other than the above may be blended as necessary. For example, in the ink according to this embodiment, a surfactant may be blended in order to enhance the compatibility and dispersion stability of each component. The surfactant has the effect of enhancing the wettability of the ink on a recording medium and the effect of enhancing the compatibility and dispersion stability of each component included in the ink. Examples of the surfactant blended in the ink according to this embodiment include an anionic surfactant, a cationic surfactant, a non-ionic surfactant, and an amphoteric surfactant. The surfactant is favorably a non-ionic surfactant. The non-ionic surfactant is favorably a surfactant having an acetylene bond, more favorably a surfactant having an acetylene glycol structure or an acetylene alcohol structure.

Further, in the ink according to this embodiment, a surfactant may be blended as a dispersant that has the effect of enhancing the dispersibility of the pigment a in the solvent. The surfactant blended as a dispersant is blended separately from the above surfactant blended in order to enhance the compatibility and dispersion stability of each component, and reduces the interfacial tension between the pigment a and the solvent to enhance the dispersibility of the pigment a in the solvent. As such a surfactant, for example, a nonionic surfactant or an anionic surfactant can be used.

Further, in the ink according to this embodiment, various additives such as a water-soluble moisturizing agent, a dissolution stabilizer, an anti-drying agent, an antioxidant, a viscosity adjustor, a pH adjuster, a neutralizer, and an antifungal agent may be blended as necessary, in addition to the dispersant.

[Examples and Comparative Examples]

As Examples and Comparative Examples of the present disclosure, inks were prepared and evaluated.

(Preparation of ink)

First, a pigment dispersion liquid including the pigment a dispersed in water was prepared.

The pigment dispersion liquid was prepared by blending the pigment a, the pigment dispersion resin b, methyl ethyl ketone (MEK), sodium hydroxide, a 1N aqueous sodium hydroxide solution, and water such that the content shown in Table 1 was achieved.

(Table 1)

| Component | Content (mass%) |
|---|---|
| Pigment a | 12.5 |
| Pigment dispersion resin b | Determine for each sample |
| MEK | Determine for each sample |
| 1N NaOH | Determine for each sample |
| Water | Remainder |

In all of Examples and Comparative Examples, carbon black was used as the pigment a, a benzylmethacrylate/methacrylic acid block copolymer was used as the pigment dispersion resin b, and ion exchanged water was used as water.

In order to obtain a pigment dispersion liquid, first, a 1N aqueous sodium hydroxide solution and water were added to the solution in which the pigment dispersion resin b was dissolved in a solvent (methyl ethyl ketone) by a shaker such that the neutralization ratio of the pigment dispersion resin b was a predetermined value, and the pigment a was further added thereto and dispersed. After that, the solvent removal treatment was performed on the solution to obtain a pigment dispersion liquid.

Next, inks according to Examples and Comparative Examples were prepared. The inks according to Examples and Comparative Examples were prepared by blending the above pigment dispersion liquid, SURFYNOL (registered trademark) 420, triethylene glycol monobutyl ether, 3-methyl-1,5-pentanediol, glycerin, and water such that the content shown in Table 2 was achieved. SURFYNOL (registered trademark) 420 was blended as a surfactant. Triethylene glycol monobutyl ether, 3-methyl-1,5-pentanediol, and glycerin were blended as water-soluble moisturizing agents. As water, ion exchanged water was used.

(Table 2)

| Component | Content (mass%) |
|---|---|
| Pigment dispersion liquid | 40.0 |
| SURFYNOL 420 | 0.3 |
| Triethylene glycol monobutyl ether | 4.0 |
| 3-methyl-1,5-pentanediol | 20.0 |
| Glycerin | 5.0 |
| Water | Remainder |

In the preparation of each ink, the solvent was stirred using a stirrer while the components shown in Table 2 were added thereto in the order. Further, the ink obtained after stirring was filtrated using a filter with a pore size of $\varphi 5$ $\mu$m to remove foreign substances, debris, and coarse particles.

(Measurement and evaluation of inks)

For the inks according to Examples and Comparative Examples, the solid in the supernatant liquid was measured and the image density and the preservation stability were evaluated.

·Measurement of solid in supernatant liquid

In the measurement of the solid in the supernatant liquid for each ink, first, an ultracentrifuge ("himac (registered trademark) CS150FNX" manufactured by Eppendorf Himac Technologies Co., Ltd., rotor: S140AT) was used to centrifuge each ink at a rotation speed of 140,000 rpm (1,050,000 G) for 3 hours. This precipitated a pigment dispersion that is a complex of the pigment dispersion resin b adsorbed on the pigment a included in each ink. Next, 30 $\mu$L of the supernatant liquid of each ink after the centrifugal treatment was transferred to an aluminum container for thermogravimetric measurement. Next, a mass M1 of 30 $\mu$L of the supernatant liquid was measured. Next, a thermogravimetric analyzer ("TG/DTA7200" manufactured by Hitachi High-Tech Corporation) was used to perform thermogravimetric analysis in accordance with the scheme shown in the following Table 3. Then, a reduced mass M2 of the measurement target was measured between temperatures of 200°C to 500°C. The reduced mass M2 was regarded as the mass of the solid in the supernatant liquid. The mass ratio of the solid in the supernatant liquid was calculated in accordance with the following equation.

Mass ratio of solid in supernatant liquid [mass%] = $100 \times M2/M1$

(Table 3)

| No. | Start (°C) | Limit (°C) | Rate (°C/min) | Hold (min) | Atmosphere |
|---|---|---|---|---|---|
| 1 | 30 | 80 | 50 | 15 | $N_2$ |
| 2 | 80 | 200 | 50 | 15 | $N_2$ |
| 3 | 200 | 500 | 50 | 5 | Atmospheric air |

·Method of evaluating image density

In the evaluation of the density of the image, an inkjet recording apparatus (line type, manufactured by KYOCERA Document Solutions Inc.) was used as a tester and plain paper was used as a recording medium. The amount of ink ejected from one recording head in the tester was set to 12 pL per dot. Then, a 10 cm × 10 cm solid image was formed on the recording medium using the tester.

The recording medium in which the image was formed was preserved in a normal temperature and normal humidity environment for 12 hours, and then, the image density of the solid image formed on the recording medium was measured using a spectrodensitometer (FD-5, manufactured by Konica Minolta, Inc.). The value obtained in this way was used as an evaluation value for the image density. For each evaluation value for the image density of each ink, evaluation was performed in accordance with the following criteria A and B. Inks with the evaluation for the image density of A are evaluated to "Pass", and inks with the evaluation of B are evaluated to "Fail".

A (Good): 1.3 or more
B (Poor): less than 1.3

·Method of evaluating long-term preservation stability

In the evaluation of the long-term preservation stability, an E-type viscometer ("TV-100EL" manufactured by TOKISANGYO) was used to measure pre-preservation viscosity V1 before and after preservation in an environment of 60°C for 30 days and post-preservation viscosity V2. On the basis of the measured pre-preservation viscosity V1 and post-preservation viscosity V2, the viscosity change ratio [%] was calculated using the following formula, and the calculated viscosity change ratio was used as an evaluation value for the long-term preservation stability.

$$\text{Viscosity change ratio (\%)} = 100 \times (V1 - V2) / V1$$

For each evaluation value for the long-term preservation stability of each ink, evaluation was performed in accordance with the following criteria A and B. Inks with the evaluation for the long-term preservation stability of A are evaluated to "Pass", and inks with the evaluation of B are evaluated to "Fail".

A (Good): -0.5% or more and 0.5% or less
B (Poor): less than -0.5% or exceeding 0.5%

(Examples 1 to 11)

In Examples 1 to 11, inks were prepared in accordance with the content shown in Table 4. Table 4 shows the acid value of the pigment dispersion resin b, the blending amounts of the pigment dispersion resin b, MEK, the 1N aqueous sodium hydroxide solution, and water in the pigment dispersion liquid, the content of the pigment dispersion resin b in the ink, the mass ratio of the pigment dispersion resin b to the pigment a, the mass ratio of MEK to water (including the water in the 1N aqueous sodium hydroxide solution), and the neutralization ratio of the pigment dispersion resin b by sodium hydroxide.

(Table 4)

| Example | Acid value of resin b (mgKOH/g) | Component of pigment dispersion liquid (mass%) | | | | Resin b (mass%) | Resin b/ Pigment a | MEK/ water | Neutralization ratio (%) |
|---|---|---|---|---|---|---|---|---|---|
| | | Resin b | MEK | 1H NaOH | Water | | | | |
| 1 | 120 | 4.00 | 21.60 | 3.52 | 58.38 | 1.60 | 0.32 | 0.350 | 40 |
| 2 | 120 | 4.00 | 16.67 | 5.29 | 61.55 | 1.60 | 0.32 | 0.250 | 60 |
| 3 | 120 | 4.00 | 10.83 | 11.01 | 61.65 | 1.60 | 0.32 | 0.150 | 80 |
| 4 | 160 | 4.00 | 21.60 | 4.70 | 57.20 | 1.60 | 0.32 | 0.350 | 40 |
| 5 | 160 | 4.00 | 16.67 | 7.05 | 59.78 | 1.60 | 0.32 | 0.250 | 60 |
| 6 | 160 | 4.00 | 10.83 | 9.40 | 63.27 | 1.60 | 0.32 | 0.150 | 80 |
| 7 | 220 | 4.00 | 21.60 | 6.46 | 55.44 | 1.60 | 0.32 | 0.350 | 40 |
| 8 | 220 | 4.00 | 16.60 | 9.69 | 57.21 | 1.60 | 0.32 | 0.250 | 60 |
| 9 | 220 | 4.00 | 10.83 | 12.92 | 59.74 | 1.60 | 0.32 | 0.150 | 80 |
| 10 | 160 | 1.50 | 17.17 | 2.64 | 66.19 | 0.60 | 0.12 | 0.250 | 60 |
| 11 | 160 | 6.33 | 16.17 | 11.16 | 53.84 | 2.53 | 0.51 | 0.250 | 60 |

In all of the inks according to Examples 1 to 11, the pigment dispersion resin b having an acid value of 120 mg KOH/g or more and 220 mg KOH/g or less was used. Further, in all of Examples 1 to 11, the content of the pigment dispersion resin b was set to 0.6 mass% or more and 2.6 mass% or less and the mass ratio of the pigment dispersion resin b to the pigment a was set to 0.12 or more and 0.51 or less. Further, in all of Examples 1 to 11, in the preparation of the pigment dispersion liquid, the blending amount of MEK was determined such that the mass ratio of MEK to water was 0.15 or more and 0.35 or less. In addition, in all of Examples 1 to 11, in the preparation of the pigment dispersion liquid, the blending amount of the 1N aqueous sodium hydroxide solution was determined such that the neutralization ratio of the pigment dispersion resin b was 40% or more and 80% or less.

Note that the neutralization ratio of the pigment dispersion resin b indicates the ratio of the neutralized acid group when the total number of acid groups included in the pigment dispersion resin b is 100%. That is, when the theoretical value of the mass of sodium hydroxide necessary for completely neutralizing the pigment dispersion resin b is N1 and the blending amount of sodium hydroxide is N2, the neutralization ratio of the pigment dispersion resin b can be calculated as the percentage ($100 \times N2 / N1$) of the blending amount N2 to the theoretical value N1.

Table 5 shows the measurement results of the solid in the supernatant liquid and the evaluation results of the image density and the preservation stability for the inks according to Examples 1 to 11.

(Table 5)

| | Amount of solid (mass%) | Evaluation result | |
|---|---|---|---|
| | | Image density | Long-term preservation stability |
| Example 1 | 1.0 | A | A |
| Example 2 | 0.5 | A | A |
| Example 3 | 2.0 | A | A |
| Example 4 | 1.5 | A | A |
| Example 5 | 1.0 | A | A |
| Example 6 | 2.5 | A | A |
| Example 7 | 2.0 | A | A |
| Example 8 | 1.5 | A | A |
| Example 9 | 3.0 | A | A |
| Example 10 | 1.0 | A | A |
| Example 11 | 1.0 | A | A |

In all of the inks according to Examples 1 to 11, the mass ratio of the solid in the supernatant liquid was 0.5 mass% or more and 3.0 mass% or less, and both the image density and the long-term preservation stability were evaluated to "Pass". This confirmed that a configuration in which an appropriate amount of the pigment dispersion resin b is free in the solvent by blending the pigment a and the pigment dispersion resin b in a well balanced amount, setting the acid value of the pigment dispersion resin b to 120 mg KOH/g or more and 220 mg KOH/g or less, setting the mass ratio of MEK to water to 0.15 or more and 0.35 or less, and setting the neutralization ratio of the pigment dispersion resin b to 40% or more and 80% or less could be obtained and the image density and the long-term preservation stability could be achieved.

(Comparative Examples 1 to 8)

In Comparative Examples 1 to 8, inks were prepared in accordance with the content shown in Table 6. Table 6 shows the acid value of the pigment dispersion resin b, the blending amounts of the pigment dispersion resin b, MEK, the 1N aqueous sodium hydroxide solution, and water in the pigment dispersion liquid, the content of the pigment dispersion resin b in the ink, the mass ratio of the pigment dispersion resin b to the pigment a, the mass ratio of MEK to water (including the water in the 1N aqueous sodium hydroxide solution), and the neutralization ratio of the pigment dispersion resin b by sodium hydroxide.

(Table 6)

| Comparative Example | Acid value of resin b (mgKOH/g) | Component of pigment dispersion liquid (mass%) | | | | Resin b (mass%) | Resin b/ Pigment a | MEK/ water | Neutralization ratio (%) |
|---|---|---|---|---|---|---|---|---|---|
| | | Resin b | MEK | 1H NaOH | Water | | | | |
| 1 | 120 | 4.00 | 22.07 | 3.08 | 58.35 | 1.60 | 0.32 | 0.360 | 35 |

(continued)

| Comparative Example | Acid value of resin b (mgKOH/g) | Component of pigment dispersion liquid (mass%) | | | | Resin b (mass%) | Resin b/ Pigment a | MEK/ water | Neutralization ratio (%) |
|---|---|---|---|---|---|---|---|---|---|
| | | Resin b | MEK | 1H NaOH | Water | | | | |
| 2 | 220 | 4.00 | 10.20 | 13.73 | 59.57 | 1.60 | 0.32 | 0.140 | 85 |
| 3 | 120 | 4.00 | 22.07 | 3.08 | 58.35 | 1.60 | 0.32 | 0.360 | 35 |
| 4 | 220 | 4.00 | 10.20 | 13.73 | 59.57 | 1.60 | 0.32 | 0.140 | 85 |
| 5 | 110 | 4.00 | 16.67 | 4.85 | 61.99 | 1.60 | 0.32 | 0.250 | 60 |
| 6 | 230 | 4.00 | 16.63 | 10.13 | 56.73 | 1.60 | 0.32 | 0.250 | 60 |
| 7 | 160 | 1.27 | 17.20 | 2.64 | 66.39 | 0.51 | 0.10 | 0.250 | 60 |
| 8 | 160 | 6.67 | 16.10 | 11.16 | 53.57 | 2.67 | 0.53 | 0.250 | 60 |

Comparative Examples 1 and 3 are different from the above Examples in that the mass ratio of MEK to water exceeds 0.35 and the neutralization ratio of the pigment dispersion resin b is less than 40%. Comparative Examples 2 and 4 are different from the above Examples in that the mass ratio of MEK to water is less than 0.15 and the neutralization ratio of the pigment dispersion resin b exceeds 80%. Comparative Example 5 is different from the above Examples in that the acid value of the pigment dispersion resin b is less than 120 mg KOH/g. Comparative Example 6 is different from the above Examples in that the acid value of the pigment dispersion resin b exceeds 220 mg KOH/g. Comparative Example 7 is different from the above Examples in that the content of the pigment dispersion resin b in the ink is less than 0.6 mass% and the mass ratio of the pigment dispersion resin b to the pigment a is less than 0.12. Comparative Example 8 is different from the above Examples in that the content of the pigment dispersion resin b in the ink exceeds 2.6 mass% and the mass ratio of the pigment dispersion resin b to the pigment a exceeds 0.51.

Table 7 shows the measurement results of the solid in the supernatant liquid and the evaluation results of the image density and the preservation stability for the inks according to Comparative Examples 1 to 8.

(Table 7)

| | Amount of solid (mass%) | Evaluation result | |
|---|---|---|---|
| | | Image density | Long-term preservation stability |
| Comparative Example 1 | 3.2 | B | B |
| Comparative Example 2 | 3.5 | B | B |
| Comparative Example 3 | 3.5 | B | B |
| Comparative Example 4 | 4.0 | B | B |
| Comparative Example 5 | - | - | - |
| Comparative Example 6 | - | - | - |
| Comparative Example 7 | - | - | - |
| Comparative Example 8 | - | - | - |

In all of the inks according to Comparative Examples 1 to 4, the mass ratio of the solid in the supernatant liquid exceeded 3.0 mass% and both the image density and the long-term preservation stability were evaluated to "Fail". Further, in Comparative Examples 5 to 8, the pigment a was not sufficiently dispersed, and the measurement of the solid in the supernatant liquid the evaluation of the image density and the preservation stability could not be performed.

In Comparative Examples 1 and 3 in which the mass ratio of MEK to water exceeds 0.35, it is conceivable that the increase in MEK covering the pigment dispersion resin b reduced the probability of contact between the benzylmethacrylate chain of the pigment dispersion resin b and the pigment a, thereby increasing the pigment dispersion resin b that is free in the solvent without being adsorbed on the pigment a. Further, in Comparative Examples 1 and 3 in which the neutralization ratio of the pigment dispersion resin b is less than 40%, it is conceivable that the dispersibility of the pigment dispersion resin b in water was insufficient, thereby increasing the pigment dispersion resin b that is free in the solvent without being adsorbed on the pigment a.

In Comparative Examples 2 and 4 in which the neutralization ratio of the pigment dispersion resin b exceeds 80%, it is conceivable that the transfer of MEK corresponding to COO⁻ of methacrylic acid in the pigment dispersion resin b to the benzylmethacrylate chain reduced the probability of contact between the benzylmethacrylate chain of the pigment dispersion resin b and the pigment a, thereby increasing the pigment dispersion resin b that is free in the solvent without being adsorbed on the pigment a.

In Comparative Examples 5 and 6 in which the acid value of the pigment dispersion resin b is outside the range of 120 mg KOH/g or more and 220 mg KOH/g or less, it is conceivable that the adsorption state of the pigment dispersion resin b on the pigment a became unstable, resulting in insufficient dispersion of the pigment a. In Comparative Examples 7 and 8 in which the content of the pigment dispersion resin b is outside the range of 0.6 mass% or more and 2.6 mass% or less and the mass ratio of the pigment dispersion resin b to the pigment a is outside the range of 0.12 or more and 0.51 or less, it is conceivable that the effect of dispersing the pigment a by the pigment dispersion resin b was insufficient, resulting in insufficient dispersion of the pigment a.

**Claims**

1. An inkjet ink, comprising:

   a pigment;
   a block copolymer including a hydrophobic polymer block formed of benzylmethacrylate and a hydrophilic polymer block formed of methacrylic acid; and
   water,
   the block copolymer having an acid value of 120 mg KOH/g or more and 220 mg KOH/g or less,
   a content of the block copolymer being 0.6 mass% or more and 2.6 mass% or less,
   a mass ratio of the block copolymer to the pigment being 0.12 or more and 0.51 or less, and
   a mass ratio of a solid in a supernatant liquid obtained by centrifugation being 0.5 mass% or more and 3.0 mass% or less.

Europäisches
Patentamt

European
Patent Office

Office européen
des brevets

# EUROPEAN SEARCH REPORT

**Application Number**

EP 25 19 9904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 225834 A (DAINICHISEIKA COLOR CHEM) 10 November 2011 (2011-11-10) | 1 | INV.<br>C09D11/106 |
| Y | * paragraphs [0062], [0063], [0074], [0077]; claims; examples * | 1 | C09D11/107<br>C09D11/322<br>C09D11/326 |
| Y | US 2014/094559 A1 (LEE HEE HYUN [US] ET AL) 3 April 2014 (2014-04-03)<br>* claims; examples * | 1 | C09D153/00 |
| A,D | JP 5 636580 B2 (DAINICHISEIKA COLOR CHEM) 10 December 2014 (2014-12-10)<br>* claims; examples * | 1 | |

-----

-----

-----

**TECHNICAL FIELDS SEARCHED (IPC)**

C09D
C08F

The present search report has been drawn up for all claims

| Place of search | Date of completion of the search | Examiner |
|---|---|---|
| Munich | 28 January 2026 | Zeslawski, Wojciech |

EPO FORM 1503 03.82 (P04C01)

## ANNEX TO THE EUROPEAN SEARCH REPORT
## ON EUROPEAN PATENT APPLICATION NO.

EP 25 19 9904

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2026

| Patent document cited in search report | | Publication date | Patent family member(s) | | Publication date |
|---|---|---|---|---|---|
| JP 2011225834 | A | 10-11-2011 | JP 5666956 B2 | | 12-02-2015 |
| | | | JP 2011225834 A | | 10-11-2011 |
| US 2014094559 | A1 | 03-04-2014 | US 2014094559 A1 | | 03-04-2014 |
| | | | WO 2013009343 A1 | | 17-01-2013 |
| JP 5636580 | B2 | 10-12-2014 | JP 5636580 B2 | | 10-12-2014 |
| | | | JP 2012036251 A | | 23-02-2012 |

EPO FORM P0459

For more details about this annex : see Official Journal of the European Patent Office, No. 12/82

**REFERENCES CITED IN THE DESCRIPTION**

**Patent documents cited in the description**

- JP 5636580 B